# EUROPEAN PATENT SPECIFICATION

(11) **EP 2 215 374 B1**
(45) Date of publication and mention of the grant of the patent: **14.05.2014**
(21) Application number: 08843917.9
(22) Date of filing: 30.09.2008
(51) Int. Cl.: F16C 11/06, B62D 7/16

(54) **A BALL STEERING PIN ASSEMBLY FOR REDUCED WEAR AND METHOD THEREFOR**
KUGELLENKZAPFENANORDNUNG FÜR VERMINDERTEN VERSCHLEISS UND VERFAHREN DAFÜR
ENSEMBLE AXE DE DIRECTION À BILLES POUR UNE USURE RÉDUITE ET SON PROCÉDÉ

(30) Priority: 02.11.2007 US 934609
(43) Date of publication of application: 11.08.2010
(73) Proprietor: Expander Americas, Inc., Cottonwood, AZ 86326 (US)
(72) Inventor: SVENSSON, Roger, Cottonwood, AZ 86326 (US)
(74) Representative: Lowe, Alastair Nicholas
(86) International application number: PCT/US2008/078238
(87) International publication number: WO 2009/058502

(56) References cited:
- WO-A1-02/23054
- DE-C- 925 802
- US-A- 2 840 404
- US-A- 3 609 994
- US-A- 4 372 621
- US-A- 4 666 329
- US-A- 4 880 343
- US-A- 4 990 043
- US-A- 5 190 393
- US-A- 6 113 302
- US-A1- 2005 242 539
- US-B1- 6 357 956
- US-B1- 6 413 003

## Description

### FIELD OF THE INVENTION

This invention relates generally to a pivot pin and, more specifically, to a ball steering pin assembly for a steering system for heavy duty trucks which reduces wear between the pin and a bore formed in the steering assembly.

### BACKGROUND OF THE INVENTION

In general, steering systems for heavy duty trucks such as those used in the forest, mining, and construction industry have a plurality of ball steering pins. The ball steering pins are used to hold different components of the steering assembly together while allowing the components to move and/or rotate. The problem with current ball steering pins is that there is a tendency for wear. Even with close original tolerances, wear begins to form between the tapered part of the pin and the tapered bore formed in the components of the steering assembly. As the tapered bores begin to wear, the process accelerates and the tapered bore becomes oval in shape. The oval shaped bore affects both the efficiency and stability of the machines since the pin will begin to move within the tapered bore formed in the component. Repairing the steering assembly is an expensive and time consuming process. The tapered bore formed in the component needs to be welded up and re-bored. Furthermore, this repair is only temporary as the wear on the tapered bore will reappear after a period of time.

Therefore, a need existed to provide a device and method to overcome the above problem. The device and method would provide a ball steering pin assembly for a steering system for heavy duty trucks which reduces wear between the pin and tapered bore formed in the steering pin assembly.
WO02/23054 describes an arrangement for mounting a first component in relation to a second component wherein said second component comprises a through hole wherein said first component comprises an end section which is provided with threads and is adapted to be guided into and inserted through said hole in said second component and is adapted to be locked by means of a locking nut. The arrangement comprises an essentially cylindrical part having a slightly larger outside diameter than the inside diameter of said hole and being adapted for forced fit against the inside surface of said hole.

### SUMMARY OF THE INVENTION

A steering pin assembly has an expansion sleeve. The expansion sleeve has a housing having a channel formed there through. A plurality of slots is vertically formed in the housing. A pin is provided having a tapered body. A locking device is provided and engages the pin. The locking device pulls the pin down into the channel forcing the expansion sleeve to expand.

A steering pin assembly for use in a steering system has an expansion sleeve. The expansion sleeve has a housing having a tapered channel formed there through. A plurality of slots is formed in the housing. A pin is provided having a tapered body. The pin is positioned in the channel of the expansion sleeve. The pin and expansion sleeve are placed in an opening formed between components of the steering system to hold the components together. A locking device is provided and engages a bottom section of the tapered body. The locking device pulls the pin down into the channel forcing the expansion sleeve to expand in the opening and prevents the pin from moving in the opening.

A steering pin assembly for use in a steering system has an expansion sleeve. The expansion sleeve has a housing having a tapered channel formed there through. A plurality of slots is formed in the housing. A pin is provided having a tapered body, wherein the pin is positioned in the channel of the expansion sleeve. The pin and expansion sleeve are placed in an opening formed between components of the steering system to hold the components together. A locking device engages the pin. The locking device pulls the pin down into the channel forcing the expansion sleeve to expand in the opening and prevents the pin from moving in the opening. A tension washer is positioned between the expansion sleeve and the locking device to provide a pulling mechanism when torque is applied to the locking device.

The present invention is best understood by reference to the following detailed description when read in conjunction with the accompanying drawings.

### BRIEF DESCRIPTION OF THE DRAWINGS

**Figure 1** is an elevated perspective view of a steering system for heavy duty trucks;
**Figure 2** is a cross-sectional view of a prior art ball steering pin used in the steering system shown in **Figure 1**;
**Figure 3** is a perspective view of the ball steering pin assembly of the present invention;
**Figure 4** is a cross-sectional view of ball steering pin assembly of Figure 3;

Common reference numerals are used throughout the drawings and detailed description to indicate like elements.

### DETAILED DESCRIPTION

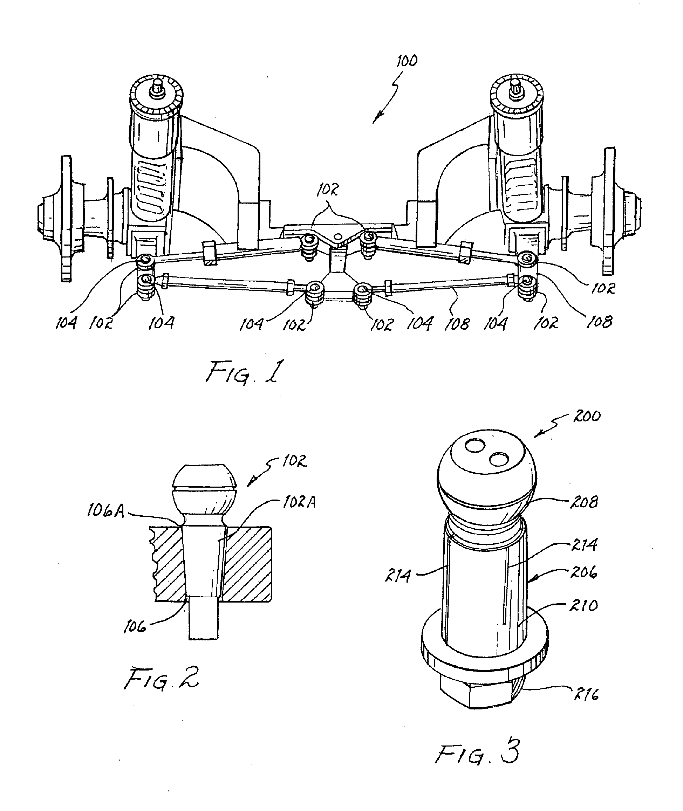

Referring to **Figure 1**, a steering assembly **100** is shown. The steering assembly **100** is used in steering systems for heavy duty trucks such as those used in the forest, mining, and construction industry. The steering assembly **100** has a plurality of ball steering pins **102**. In the steering assembly **100** shown in **Figure 1****,** eight ball steering pins **102** are used. However, this is just shown as an example and should not be seen as to limit the scope of the present invention. The ball steering pins **102** are used to secure different components of the steering assembly 100 together while allowing the components to pivot and/or move.

The problem with current prior art ball steering pins **102** is that there is a tendency for wear. Even with close original tolerances, the openings **104** formed in the components of the steering assembly **100** will begin to wear. As the openings **104** begin to wear, the process accelerates and the openings **104** begin to change in shape and dimension. The openings **104** become elongated and oval in shape. The oval shaped openings **104** affect both the efficiency and stability of the steering assembly **100 and** hence the vehicle since the ball steering pin **102** will begin to move within the oval opening formed in the component. Repairing the opening **104** is an expensive and time consuming process. The opening **104 in the** component needs to be welded up and re-bored. Furthermore, the repair is only temporary as the wear on the openings will reappear after a period of time

Referring now to **Figure 2****,** a cross-sectional view of a prior art ball steering pin 102 is shown. The ball steering pin 102 is placed inside a channel 106 formed in a component 108 of the steering assembly 100. The channel 106 is formed through the component. The channel 106 is generally tapered. The channel 106 will have a top opening 106A which is generally larger then a bottom opening. The channel 106 will get smaller progressively smaller as one move from the top opening 106A to the bottom opening.

The ball steering pin 102 is positioned in the channel 106. The body 102A of the ball steering pin 102 is tapered and has similar dimensions as the channel 106 to allow the body 102A of the pin 102 to slide into the channel 106. As shown in Figure 2, the top of the body 102A has a diameter "C" which is the same diameter as the opening 106A formed in the component of the steering assembly 100. Due to the movement of the steering assembly 100, the ball steering pin 102 begins to wear on the channel 106 causing the diameter of the channel 106 to begin to elongate and become oval in shape. As the diameter of the channel 106 becomes larger, the ball steering pin 102 will begin to move within the channel 110 formed in the component of the steering assembly 100. The movement of the pin 108 affects both the efficiency and stability of the steering assembly 100.

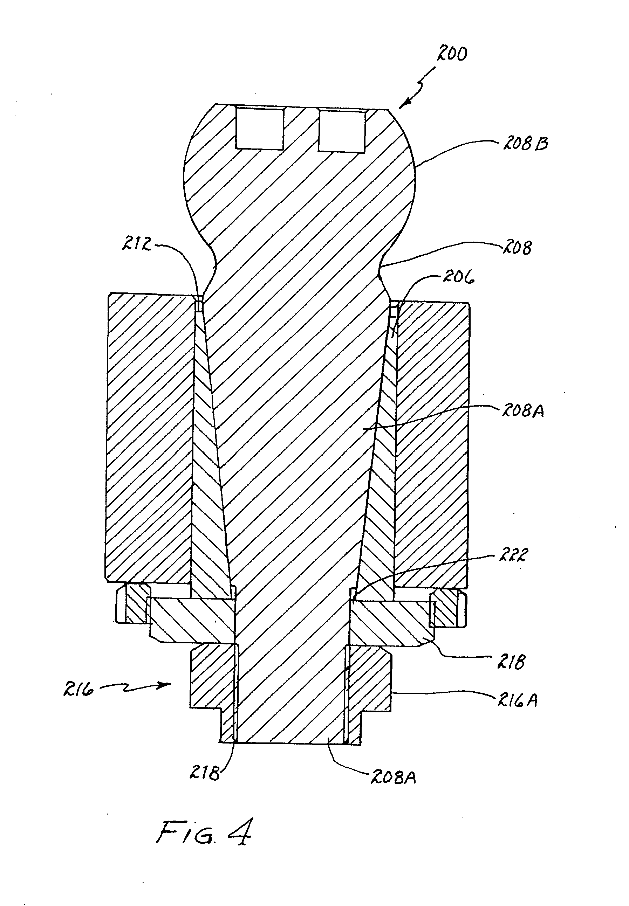

Referring now to Figures 3 and 4, a steering pin assembly 200 of the present invention is shown. The steering pin assembly 200 is positioned in an opening 104 (Figure 1) formed in one or more components 108 (Figure 1) of the steering assembly 100 (Figure 1) to hold the components 108 of the steering assembly 100 together. The steering pin assembly 200 is comprised of an expansion sleeve 206 and a pin 208. The pin 208 is similar to that used in the prior art. The pin 208 has a body section 208A. The body section 208A is generally tapered. A ball member 208B extends from the top of the body section 208A.

The expansion sleeve 206 has a cylindrical housing shaving a channel 212. A plurality of slots 214 are formed in the housing 210 and go through the housing 210 into the channel 212. The number of slots 214 formed in the housing 210 is based on the diameter of the housing 210. The larger the housing 210, the more slots 214 are generally needed. In general, four to six slots are formed in the housing 210. The slots 214 will run vertically down the side of the housing 210. At least one slot 214 will run the length of the housing 210. The housing 210 is generally made of a sturdy metallic material. In accordance with one embodiment of the present invention, a treated yellow chrome oxide is used to form the housing 210.

The expansion sleeve 206 has a locking device 216. The locking device 216 is coupled to a bottom portion of the body section 208A of the pin 208. The locking device 216 engages the pin 208 and forces the pin downward into the expansion sleeve 206 thereby locking the steering pin assembly 200 into the opening. In accordance with one embodiment of the present invention, the locking device 216 is a locking nut 216A. The locking nut 216A will have an opening 218 formed in the center thereof. The opening 218 will have a threaded pattern which will engage a threaded bottom portion of the body section 208A of the pin 208. By rotating the locking nut 216A in the proper direction, a torque is applied which forces the pin 208 to be pulled downwards into the expansion sleeve 206. This secures the steering pin assembly 200 in the opening 202 and prevents the steering pin assembly 200 from moving in the opening. In operation, since the body section 208A of the pin 208 is tapered, as the pin 208 is pulled down into the expansion sleeve 206, the tapered body section 208A pushes out against the housing 210 of the expansion sleeve 206. The slots 214 in the housing 210 allow the housing to expand thereby filing the opening 202 and securing the steering pin assembly 200 in the opening 202.

A washer 218 may be positioned between the locking device 216 and the housing 210. In accordance with one embodiment of the present invention, the washer 218 is a spring tension washer. The washer 218 generally has a circular body section. An opening 222 is formed in a central area of the body section. The opening 222 may be threaded or non-threaded. The washer 218 is formed of a material that allows for keeping a spring tension between the locking device 216 and the housing 210 of the expansion sleeve 206. As shown in Figure 4, the washer 218 is placed in contact with the bottom section of the component 108. The washer 218 is positioned so that an opening 222 of the washer 218 is aligned with the opening 202. The washer 218 provides a pulling mechanism when torques is applied to the locking device 216.

This disclosure provides exemplary embodiments of the present invention. The scope of the present invention is not limited by these exemplary embodiments. Numerous variations, whether explicitly provided for by the specification or implied by the specification, such as variations in structure, dimension, type of material and manufacturing process may be implemented by one of skill in the art in view of this disclosure.

## Claims

1. A steering pin assembly comprising:
an expansion sleeve (206), the expansion sleeve having a housing (210) having a channel (212) formed there through, a plurality of slots (214) are vertically formed in the housing;
a pin (208) having a tapered body; and
a locking device (216) which engages the pin, the locking device pulling the pin down into the channel forcing the expansion sleeve to expand.

2. A steering pin assembly in accordance with Claim 1 further comprising a tension washer (218) positioned between the expansion sleeve (206) and the locking device (216).

3. A steering pin assembly in accordance with Claim 2 wherein the tension washer (218) comprises:
a circular body member; and
a washer opening (222) formed in a central area of the circular body member.

4. A steering pin assembly in accordance with Claim 3 wherein the washer opening (222) is threaded.

5. A steering pin assembly in accordance with Claim 1 wherein the locking device (216) is a locking nut (216A).

6. A steering pin assembly in accordance with Claim 5 wherein the locking nut (216A) has an opening (218) having a threaded patterned formed around the opening, the threaded pattern engaging threads formed on a bottom section of the tapered body of the pin (208).

7. A steering pin assembly as claimed in claim 1, wherein the channel (212) is tapered, the pin (208) is positioned in the channel of the expansion sleeve (208), the pin and expansion sleeve being placed in an opening formed between components of the steering system to hold the components together; and
the locking device (216) engages a bottom portion of the tapered body of the pin.

## Patentansprüche

1. Lenkzapfenanordnung, die aufweist:
eine Dehnungshülse (206), wobei die Dehnungshülse ein Gehäuse mit einem durch es hindurch ausgebildeten Kanal (212) hat, wobei mehrere Schlitze (214) vertikal in dem Gehäuse ausgebildet sind;
einen Zapfen (206) mit einem konisch zulaufenden Körper; und
eine Sperrvorrichtung (216), die in den Zapfen eingreift, wobei die Sperrvorrichtung den Zapfen nach unten in den Kanal zieht, was die Dehnungshülse dazu zwingt, sich auszudehnen.

2. Lenkzapfenanordnung nach Anspruch 1, die ferner eine Spannscheibe (218) aufweist, die zwischen der Dehnungshülse (206) und der Sperrvorrichtung (216) angeordnet ist.

3. Lenkzapfenanordnung nach Anspruch 2, wobei die Spannscheibe (218) aufweist:
ein kreisförmiges Körperelement; und
eine Scheibenöffnung (222), die in einem mittleren Bereich des kreisförmigen Körperelements ausgebildet ist.

4. Lenkzapfenanordnung nach Anspruch 3, wobei die Scheibenöffnung (222) ein Gewinde hat.

5. Lenkzapfenanordnung nach Anspruch 1, wobei die Sperrvorrichtung (216) eine Sperrmutter (216A) ist.

6. Lenkzapfenanordnung nach Anspruch 5, wobei die Sperrmutter (216A) eine Öffnung (218) mit einem um die Öffnung herum ausgebildeten Gewindemuster hat, wobei das Gewindemuster in Gewinde eingreift, die auf einem unteren Abschnitt des konisch zulaufenden Körpers des Zapfens (208) ausgebildet sind.

7. Lenkzapfenanordnung nach Anspruch 1, wobei der Kanal (212) konisch zulaufend ist, der Zapfen (218) in dem Kanal der Dehnungshülse (208) positioniert ist, wobei der Zapfen und die Dehnungshülse in einer Öffnung angeordnet sind, die zwischen Komponenten des Lenksystems ausgebildet ist, um die Komponenten zusammen zu halten;
wobei die Sperrvorrichtung (216) in einen unteren Abschnitt des konisch zulaufenden Körpers des Zapfens eingreift.

## Revendications

1. Ensemble d'axe pivot de fusée d'essieu comprenant :
une douille à expansion (206), cette douille à expansion comportant un boitier (210) comprenant un canal (212) formé au travers de celui-ci, plusieurs fentes (214) étant réalisées verticalement dans le boitier,
une broche (208) ayant un corps conique, et
un dispositif de blocage (216) venant en prise avec la broche, ce dispositif de blocage poussant la broche vers le bas de façon à provoquer l'expansion de la douille à expansion.

2. Ensemble d'axe pivot de fusée d'essieu conforme à la revendication 1, comprenant en outre une rondelle tendeuse (218) située entre la douille à expansion (206) et le dispositif de blocage (216).

3. Ensemble d'axe pivot de fusée d'essieu conforme à la revendication 2, dans lequel la rondelle tendeuse (218) comporte :
un élément de corps circulaire, et
une ouverture de rondelle (222) réalisée dans la zone centrale de l'élément de corps circulaire.

4. Ensemble d'axe pivot de fusée d'essieu conforme à la revendication 3, dans lequel l'ouverture de la rondelle (222) est filetée.

5. Ensemble d'axe pivot de fusée d'essieu conforme à la revendication 1, dans lequel le dispositif de blocage (216) est un écrou de blocage (216A).

6. Ensemble d'axe pivot de fusée d'essieu conforme à la revendication 5, dans lequel l'écrou de blocage (216A) comporte une ouverture (218) munie d'un motif fileté réalisé autour de l'ouverture, ce motif fileté venant en prise dans des filets formés sur la partie inférieure du corps conique de la broche (208).

7. Ensemble d'axe pivot de fusée d'essieu conforme à la revendication 1, dans lequel le canal (212) est conique, la broche (208) est située dans le canal de la douille à expansion (208), la broche et la douille à expansion étant positionnées dans une ouverture formée entre des composants du système de direction pour maintenir ensemble ces composants, et
le dispositif de blocage (216) vient en prise avec la partie inférieure du corps conique de la broche.
